(19) Europäisches Patentamt
European Patent Office
Office européen des brevets

(11) **EP 1 654 057 B1**

(12) **EUROPÄISCHE PATENTSCHRIFT**

(45) Veröffentlichungstag und Bekanntmachung des Hinweises auf die Patenterteilung:
**06.05.2009 Patentblatt 2009/19**

(51) Int Cl.:
***B01J 19/00*** *(2006.01)*     ***F28D 9/00*** *(2006.01)*

(21) Anmeldenummer: **04741153.3**

(22) Anmeldetag: **20.07.2004**

(86) Internationale Anmeldenummer:
**PCT/EP2004/008074**

(87) Internationale Veröffentlichungsnummer:
**WO 2005/016512 (24.02.2005 Gazette 2005/08)**

(54) **VERFAHREN ZUR ENTFERNUNG VON FLÜCHTIGEN VERBINDUNGEN AUS STOFFGEMISCHEN MITTELS MIKROVERDAMPFER**

METHOD FOR THE ELIMINATION OF VOLATILE COMPOUNDS FROM MIXTURES BY MEANS OF A MICRO EVAPORATOR

PROCEDE POUR ELIMINER DES COMPOSES VOLATILS PRESENTS DANS DES MELANGES DE SUBSTANCES AU MOYEN D'UN MICRO-EVAPORATEUR

(84) Benannte Vertragsstaaten:
**DE ES FR GB IT**

(30) Priorität: **02.08.2003 DE 10335451**

(43) Veröffentlichungstag der Anmeldung:
**10.05.2006 Patentblatt 2006/19**

(73) Patentinhaber: **Bayer MaterialScience AG 51368 Leverkusen (DE)**

(72) Erfinder:
 • **KÜPPER, Kurt-Manfred 18225 Kühlungsborn (DE)**
 • **WILMES, Oswald 51061 Köln (DE)**
 • **STEENBECK, Hartmut 50765 Köln (DE)**
 • **SANCHEN, Almut D-99310 Arnstadt (DE)**

(56) Entgegenhaltungen:
WO-A-01/65194     DE-A- 10 010 400
US-A- 3 234 994     US-B1- 6 200 536

 • EHRFELD W ET AL: "ANWENDUNGSPOTENTIALE CHEMISCHER UND BIOLOGISCHER MIKROREAKTOREN" JAHRBUCH. VERFAHRENSTECHNIK UND CHEMIEINGENIEURWESEN, XX, XX, Bd. 69, Nr. 7, 1997, Seiten 102-116, XP000942778

Bemerkungen:
Die Akte enthält technische Angaben, die nach dem Eingang der Anmeldung eingereicht wurden und die nicht in dieser Patentschrift enthalten sind.

EP 1 654 057 B1

**Beschreibung**

Die Erfindung betrifft ein Verfahren zur Entfernung von flüchtigen Verbindungen aus reaktiven oder nichtreaktiven Stoffgemischen.

Üblicherweise werden in der Technik für die Verdampfung von flüchtigen Stoffen aus nichtreaktiven, temperatursensitiven Stoffgemischen Dünnschichtverdampfer eingesetzt. Dazu gehören z.B. Wendelrohrverdampfer, Fallfilmverdampfer, Zentrifugalverdampfer. Bei Wendelrohrverdampfern wird das Produkt oft überhitzt, insbesondere wenn der Verdampfer über eine Druckhaltung am Austritt betrieben wird. Beim Fallfilm- oder Zentrifugalverdampfer werden relativ große Filmdicken von bis zu 1 mm bzw. bis zu 0,1 mm erreicht, die den Stoff- und Wärmetransport ungünstig beeinflussen und daher eine größere Verweilzeit erfordern.

Aus M. K. Drost, Ch. Call, J. Cuta, R. Wegeng, Microchannel combustor/evaporator thermal processes, Microscale Thermophysical Engineering, 1:321-332, 1997 ist ein mit einer keramischen Verbrennungskammer gekoppelter mikrostrukturierter Verdampfer, welcher den Wärmeübergang von den Verbrennungsprodukten auf die Oberflächen der Verbrennungskammer verstärkt, bekannt. Mikrostrukturierte Verdampfer zum Verdampfen flüchtiger Verbindungen aus Mehrstoffgemischen mit einer Verdampfungsleistung im Bereich von mehreren kg/h oder mehr sind hierin nicht beschrieben.

DE-A 10010400 beschreibt den Einsatz eines mikrostrukturierten Wärmetauschers zur Verdampfung von flüchtigen Stoffen. Hinsichtlich einer thermischen Auftrennung von Stoffgemischen oder gar der Abtrennung reaktiver Komponenten aus einer Mischung ist dem Dokument nichts zu entnehmen.

US 3 234 994 beschreibt die Verwendung eines Flash-Verdampfers zur Abtrennung von flüchtigen Komponenten aus Stoffgemischen. Für eine effiziente und möglichst weitgehende Abtrennung von monomeren Isocyanaten aus Polyisocyanatgemischen ist ein solcher Verdampfer jedoch nicht geeignet. In wie weit sich für ein solches Trennproblem mikrostrukturierte Verdampfer einsetzen lassen ist dem Stand der Technik nach nicht zu entnehmen.

Der Erfindung liegt die Aufgabe zu Grunde, flüchtige Stoffe wie monomere Diisocyanate aus Stoffgemischen wie Polyisocyanaten, welche unter Betriebsbedingungen niederviskos sind, unter schonenden Bedingungen zu entfernen, d.h. bei möglichst niedriger Temperatur, kurzer Verweilzeit und enger Verweilzeitverteilung.

Gegenstand der Erfindung ist ein Verfahren zur Entfernung von wenigstens einem monomeren Diisocyanat aus einem Stoffgemisch wenigstens enthaltend ein Polyisocyanat mit Hilfe mindestens eines Mikroverdampfers, wobei der Mikroverdampfer Kanäle für die Führung des Stoffgemisches mit einem hydraulischen Durchmesser von 5 bis 1000 $\mu$m und eine spezifische Verdampferfläche von mindestens $10^3$ m$^2$/m$^3$ aufweist.

In einer bevorzugten Ausführungsform weisen die Kanäle des Mikroverdampfers einen hydraulischen Durchmesser von 30 bis 500 $\mu$m auf.

In einer weiteren bevorzugten Ausführungsform weisen auch die Kanäle für die Führung des Heizmediums einen hydraulischen Durchmesser von 5 bis 1000 $\mu$m, besonders bevorzugt von 30 bis 500 $\mu$m, auf.

Die Kanäle des Mikroverdampfers für die Durchleitung des Stoffgemisches und des Heizmediums können beliebige geometrische Formen aufweisen. Der Querschnitt der Kanäle kann z.B. rund, halbrund, eckig, insbesondere rechteckig oder dreieckig, sein. Unabhängig von der Geometrie der Kanäle wird im Sinne der vorliegenden Erfindung der hydraulische Durchmesser als kennzeichnende Größe verwendet. Der hydraulische Durchmesser ist gegeben durch die vierfache Querschnittsfläche (F) dividiert durch den Umfang (U) des Querschnitts:

$$\text{Hydraulischer Durchmesser} = 4\ F/U$$

Aufgrund der sehr kleinen Abmessungen der Strömungskanäle erfolgen in Mikrostrukturverdampfern die Wärme- und Stoffübergänge schneller und effizienter als in konventionellen Verdampfern wie Fallfilmverdampfer o.dgl. Ein Mikroverdampfer im Sinne der vorliegenden Erfindung besitzt eine spezifische Verdampferfläche von mindestens $10^3$ m$^2$/m$^3$. Nicht-mikrostrukturierte Verdampfer, z.B. Fallfilmverdampfer, besitzen üblicherweise eine spezifische Verdampferfläche von weniger als $0{,}5 \cdot 10^3$ m$^2$/m$^3$. Dabei ist die spezifische Verdampferfläche gegeben durch das Verhältnis von Wärmeaustauschfläche zu nutzbarem Volumen des Verdampfers. Das nutzbare Volumen wiederum ist bei konventionellen, d.h. nicht-mikrostrukturierten, und mikrostrukturierten Verdampfern gegeben durch das Gesamtvolumen vermindert um das Volumen der Einbauten.

Nach dem erfindungsgemäßen Verfahren tritt das Stoffgemisch flüssig in den Mikrostrukturverdampfer ein. Über die Zufuhr von Wärme wird die Verdampfung von flüchtigen Komponenten ermöglicht und das Stoffgemisch tritt am Ausgang des Mikroverdampfers zweiphasig als Gas/Flüssig-Gemisch aus. Die Verdampfung erfolgt dabei aufgrund der geringen Verweilzeit schonend, d.h. mit einer möglichst geringen Überhitzung sieden die leichter flüchtigen Stoffe im Stoffgemisch. Leicht flüchtige Komponenten im Sinne der vorliegenden Erfindung zeichnen sich dadurch aus, dass sie unter den Betriebsbedingungen im Mikroverdampfer oder am Austritt des Mikroverdampfers teilweise oder vollständig verdampfen.

In den Kanälen des Mikrostrukturverdampfers entsteht bei der Verdampfung eine Zweiphasenströmung bestehend aus Dampfblasen, deren maximale Größe durch die Kanaldimensionen begrenzt ist. Hierdurch wird eine hohe Phasengrenzfläche erzeugt, die eine schnelle Überführung der flüchtigen Stoffe in die Gasphase ermöglicht und damit eine hohe Verdampfungsrate bei kurzen Verweilzeiten gewährleistet. Weiterhin sorgt die in den Kanälen entstehende Blasenströmung durch eine Wirbelbildung innerhalb der sie umgebenden Flüssigphase für einen erhöhten Stofftransport an die Phasengrenzfläche und für einen erhöhten Wärmetransport von der Kanalwand in die Flüssigphase.

Typische Viskositäten der Stoffgemische, die nach dem erfindungsgemäßen Verfahren behandelt werden, betragen bei Betriebstemperaturen von -100 bis 500°C, vorzugsweise von 0 bis 400°C, besonders bevorzugt von 50 bis 250°C maximal 5 Pa·s, bevorzugt maximal 100 mPa·s,.

Bevorzugt beträgt die Temperatur bei dem erfindungsgemäßen Verfahren -100 bis 500°C, bevorzugt 0 bis 400°C, besonders bevorzugt 50 bis 250°C. Der Druck beträgt vorzugsweise 0 bis 100 bar, besonders bevorzugt 0 bis 10 bar, ganz besonders bevorzugt 0 bis 1 bar. Die Verweilzeit beträgt bevorzugt 0,001 bis 60 s, besonders bevorzugt 0,01 bis 10 s.

Ein Mikroverdampfer, wie er nach dem erfindungsgemäßen Verfahren eingesetzt werden kann, ist beispielsweise schichtweise aus dünnen Metall-Platten aufgebaut, wobei jede Platte eine Vielzahl von parallelen Kanälen aufweist. Die Platten sind beispielsweise kreuzweise zueinander angeordnet, so dass die Kanäle einer Platte zu den Kanälen der jeweils darunter und/oder darüber befindlichen Platte senkrecht stehen. Entsprechend werden das Wärmübertragungsmittel und das Stoffgemisch im Kreuzstromprinzip durch den Mikroverdampfer geleitet: Jede zweite Schicht ist von dem Heizmedium bzw. von dem Stoffgemisch durchströmt. Die Platten besitzen z.B. eine Dicke von 100 bis 1000 $\mu$m. Die Kanäle haben z.B. eine Länge von 0,5 bis 20 cm, vorzugsweise von 1 bis 10 cm, und einen bevorzugten hydraulischen Durchmesser von 5 bis 1000 $\mu$m, besonders bevorzugt von 30 bis 500 $\mu$m.

Als Heizmedium können die üblichen Heizmedien wie z.B. Wasserdampf, Druckwasser oder Wärmeträgeröle eingesetzt werden.

Der Mikrostrukturverdampfer kann aus einem beliebigen metallischen Werkstoff gefertigt sein, z.B. Stahl, Edelstahl, Titan, Hastelloy, Inconel oder anderen metallischen Legierungen.

Das Verfahren kann als zusätzlicher Verfahrensschritt in einem kontinuierlichen Verfahren integriert werden. Es kann auch als zusätzlicher Verfahrensschritt in einem batchweise ausgeführtem Verfahren durch wiederholtes Umpumpen eines Kreislaufstromes zur Aufkonzentrierung des gewünschten Produktes oder auch zur Verschiebung eines chemischen Gleichgewichtes eingesetzt werden. Das Verfahren kann beispielsweise als Verdampfungsschritt in einen beliebigen Prozess der chemischen oder pharmazeutischen Technik oder der Lebensmitteltechnik integriert werden.

Das Verfahren kann einstufig oder mehrstufig durch mehrfache Hintereinanderschaltung von Mikrostrukturverdampfern ausgeführt werden. Bei einem mehrstufigen Verfahren kann die Verdampfung auch auf verschiedenen Druck- und Temperaturniveaus durchgeführt werden.

Vorteilhaft an dem erfindungsgemäßen Verfahren ist, dass aufgrund der kurzen Verweilzeiten und daher niedrigen Temperaturbelastungen in dem Mikroverdampfer eine Zersetzung von temperaturempfindlichen Produkten in diesem Aufbereitungsschritt im Vergleich zu herkömmlichen Verdampfern vermindert oder gar vermieden wird. Damit werden eine höhere Ausbeute und höhere Produktqualität gewährleistet. Außerdem wird durch die geometrisch bedingte Bildung kleiner Blasen das Oberfläche-zu-Volumen-Verhältnis erhöht, weshalb eine sehr effiziente Verdampfung möglich ist. Dies ist beispielsweise bei der Entfernung von Restlösungsmitteln oder Restmonomeren aus Polymeren von besonderer Bedeutung.

Der Einsatz von Mikroverdampfern für die Verdampfung von flüchtigen Komponenten ist auch bei reaktiven Stoffgemischen von Vorteil, da das Reaktionsgleichgewicht hin zu dem gewünschten Produkt verschoben und damit die Ausbeute erhöht werden kann.

Platzbedarf und Anschaffungskosten für die Durchführung des Verfahrens sind wegen der kompakten Bauweise von Mikrostrukturverdampfers gering.

Das erfindungsgemäße Verfahren wird eingesetzt zur Abtrennung monomerer Diisocyanate von Polyisocyanaten, die beispielsweise in Polyurethan-Beschichtungssystemen zur Anwendung gelangen. Diisocyanate sind üblicherweise als giftige Arbeitsstoffe eingestuft und weisen zum Teil einen erheblichen Dampfdruck auf. Aus arbeitshygienischen Gründen dürfen sie daher in Lacksystemen nicht in monomerer Form vorliegen. Sie müssen zuvor mit Hilfe geeigneter Modifizierungsreaktionen in höhermolekulare, physiologisch unbedenkliche Polyisocyanate umgewandelt werden. Diese Umwandlung erfolgt zumeist mit einem Diisocyanat-Überschuss. Reste von nicht umgesetztem monomerem Diisocyanat werden durch Destillation aus der Reaktionsmischung entfernt.

Wesentlich ist hierbei, dass nach der Destillation im Polyisocyanat ein möglichst geringer Restgehalt an monomerem, d.h. giftigem, Diisocyanat enthalten ist. Mit dem erfindungsgemäßen Verfahren gelingt die Abtrennung der monomeren Diisocyanate bis auf die gewünschten Restgehalte von unter 0,5 %, in bestimmten Fällen auch bis unter 0,1 %. Vorteilhaft ist hierbei, dass die Polyisocyanante durch die geringe Verweilzeit und enge Verweilzeitverteilung nur eine relativ geringe thermische Belastung erfahren. Damit werden Nebenreaktionen der Isocyanatgruppen während der Destillation vermieden und zusätzlich besonders farbhelle Polyisocyanate erhalten.

Die Erfindung wird nachfolgend anhand der Figuren näher erläutert. Es zeigen:

Figur 1    ein Fließdiagramm einer ersten Ausführungsform des erfindungsgemäßen Verfah- rens zum Verdampfen von flüchtigen Verbindungen aus einem nichtreaktiven Stoffgemisch

Figur 2 ein Fließdiagramm einer zweiten Ausführungsform des erfindungsgemäßen Verfahrens zum Verdampfen von flüchtigen Verbindungen aus einem reaktiven Stoffgemisch

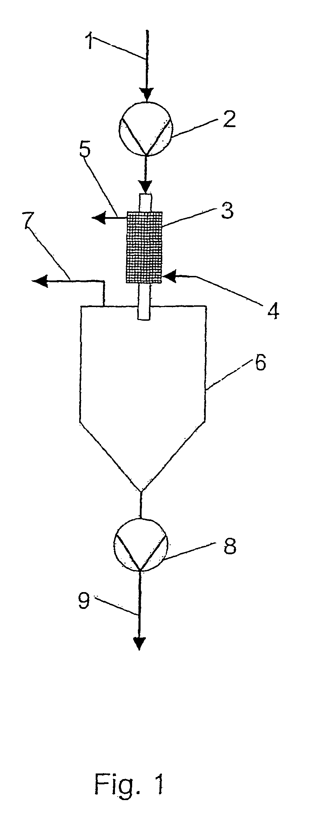

In Figur 1 ist ein Fließdiagramm zum Verdampfen von flüchtigen Komponenten aus einem nichtreaktiven Stoffgemisch dargestellt. Das flüssige Stoffgemisch wird über einen Eduktzulauf 1 mit einer Pumpe 2 in den Mikroverdampfer 3 gefördert. Der Mikrostrukturverdampfer 3 besteht aus einer Vielzahl von parallelen Kanälen, welche in Schichten angeordnet sind. In jeder 2. Schicht des Mikroverdampfers 3 wird das Stoffgemisch geführt. In den dazwischenliegenden Schichten sind ebenfalls eine Vielzahl von parallelen Kanälen angeordnet, in denen das Heizmedium geführt wird. Die Kanäle für das Edukt und das Heizmedium können z.B. parallel zueinander oder senkrecht zueinander verlaufen. Das Heizmedium wird aus einem hier nicht gezeigten Heizmediumkreislauf über einen Einlass 4 eingeführt und über einen Auslass 5 abgeführt. Aus dem Mikroverdampfer 3 strömt das Stoffgemisch als Gas/Flüssig-Gemisch in einen Gasabtrenner 6, aus dem die flüchtigen Stoffe gasförmig abgezogen werden 7. Aus diesem Gasabscheider 6 wird das Produkt 9 über eine Pumpe 8 aus der Anlage geführt.

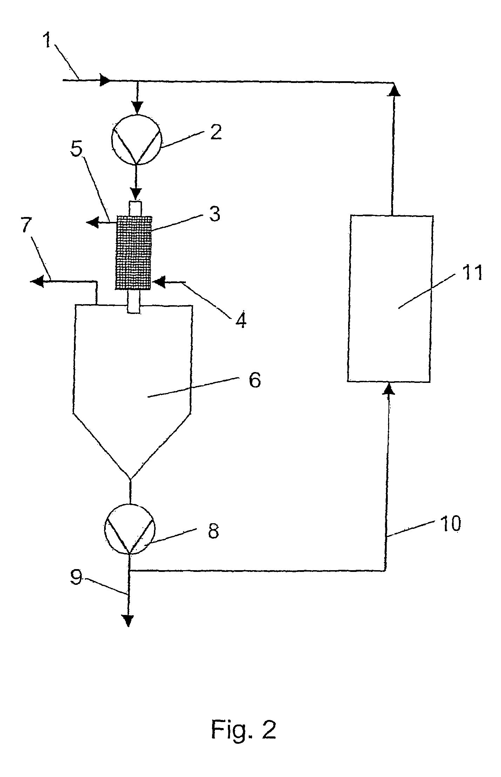

Figur 2 zeigt ein Fließdiagramm zur Verdampfung flüchtiger Bestandteile aus reaktiven Stoffgemischen. Über einen Eduktzulauf 1 wird das flüssige Stoffgemisch (Edukt) mit einer Pumpe 2 in den Verdampfer gefördert. Der Mikrostrukturverdampfer 3 ist beispielsweise ähnlich wie in Figur 1 beschrieben aufgebaut. Das Heizmedium wird analog zu Figur 1 aus einem hier nicht gezeigten Heizmediumkreislauf eingeführt 4 und abgeführt 5. Das Stoffgemisch strömt als Gas/Flüssig-Gemisch aus dem Mikroverdampfer 3 in einen Gasabscheider 6, aus dem die flüchtigen Stoffe gasförmig abgezogen werden 7. Aus diesem Gasabtrenner 6 wird das Produkt 9 über eine Pumpe 8 aus der Anlage geführt. Gegebenenfalls wird ein Teil dieses Produktstroms im Kreislauf 10 über einen Reaktor 11 geführt und über die Pumpe 2 wieder in den Mikroverdampfer 3 gegeben.

**Beispiele**

Es wurde ein Rohprodukt wie nachfolgend beschreiben hergestellt, aus dem durch Verdampfen das Diisocyanat Desmodur W® (H$_{12}$-MDI, Handelsprodukt der Fa. Bayer, NCO-Gehalt 32,1 Gew.-%) abgetrennt worden ist:

In einem Rührbehälter wurden 1586,0 kg Desmodur W® unter Stickstoffatmosphäre vorgelegt. Unter Rühren wurde auf 60° C erhitzt und nacheinander 21,5 kg eines auf 1,1,1-Tri-methylol-propan gestarteten Propylenoxid-Polyethers der OH-Zahl 385, 92,6 kg eines auf Bisphenol A gestarteten Propylenoxid-Polyethers der OH-Zahl 200 und 1470,0 kg eines auf 1,1,1-Tri-methylol-propan gestarteten Propylenoxid/Ethylenoxid-Polyethers der OH-Zahl 28 (Verhältnis Propylenoxid : Ethylenoxid = 82,5 : 17,5) temperaturkontrolliert im Bereich 60 - 80°C zugefügt. Danach wurde auf 100°C erhitzt und bis zu einem NCO-Gehalt von 14,1 Gew.-% umgesetzt. Das Rohprodukt, das noch ca. 40 Gew.-% Desmodur W® enthielt, wurde auf 50°C abgekühlt.

**Beispiel 1**

Das Rohprodukt wurde mit einer Temperatur von 60°C und einem Eintrag von 60 kg/h dem mit 30 bar Dampf (230°C) beheizten Mikrostrukturverdampfer 3 mit nachgeschaltetem Umlenkabscheider 6 zugeführt. Der Mikrostrukturverdampfer 3 hatte die folgenden Kanalabmessungen: Länge x Breite x Höhe: 40 mm x 200 $\mu$m x 100 $\mu$m. Der hydraulische Durchmesser betrug 133 $\mu$m. Die Wärmeübertragungsfläche betrug 0,135 m$^2$, die spezifische Verdampferfläche 2·10$^4$ m$^2$/m$^3$. Die Verweilzeit in dem Mikrostrukturverdampfer 3 betrug ca. 0,3 s. Über den Umlenkabscheider 6 wurden in dieser Stufe bei einem Druck von 0,8 mbar 21 kg/h Destillat (Desmodur W®) abgetrennt. Das auf diese Weise auf einen Desmodur W®-Gehalt von 7,8 Gew.-% aufkonzentrierte Rohprodukt wurde anschließend in einen auf 230°C beheizten Dünnschichtverdampfer (Verdampferfläche 1 m$^2$) überführt, der bei einem Druck von 0,5 mbar betrieben wurde. Am Austrag des Dünnschichtverdampfers wurde ein Polyisocyanatharz mit einem NCO-Gehalt von 2,55 Gew.-% erhalten, das nur noch einen Restgehalt von 0,12 Gew.-% des eingesetzten Desmodur W® enthielt.

**Beispiel 2** (Vergleichsbeispiel)

Das Rohprodukt wurde mit einer Temperatur von 60°C über eine mit 6 bar Dampf (160°C) begleitbeheizte Leitung mit einem Eintrag von 30 kg/h einem Fallfilmverdampfer mit nachgeschaltetem Umlenkabscheider zugeführt. Die Wärmeübertragungsfläche betrug 0,314 m$^2$, die spezifische Verdampferfläche betrug 1,57·10$^2$ m$^2$/m$^3$. Verdampfer und Abscheider waren mittels 30 bar Dampf auf 230°C beheizt. Die Destillation erfolgte bei 0,8 mbar. In dieser Stufe wurde eine Destillatmenge von 9 kg/h Desmodur W® erhalten.

Das auf diese Weise auf einen Desmodur W®-Gehalt von 14,4 Gew.-% aufkonzentrierte Rohprodukt wurde anschließend analog Beispiel 1 in einen auf 230°C beheizten Dünnschichtverdampfer (Verdampferfläche 1 m$^2$) überführt, oder bei einem Druck von 0,5 mbar betrieben wurde. Am Ablauf des Dünnschichtverdampfers wurde ein Polyisocyanatharz mit einem NCO-Gehalt von 2,90 Gew.-% erhalten, das einen Restgehalt von 1,25 Gew.-% des eingesetzten Desmodur W® enthielt.

Der Vergleich zwischen den Beispielen 1 und 2 zeigt, dass unter Einsatz des Mikrostrukturverdampfers das Desmodur W® deutlich effizienter abtrennbar ist als mit dem Fallfilmverdampfer.

## Patentansprüche

1. Verfahren zur Entfernung von wenigstens einem monomeren Diisocyanat als flüchtiger Verbindung aus einem Stoffgemisch, wenigstens enthaltend ein Polyisocyanat mit Hilfe mindestens eines Mikroverdampfers, wobei der Mikroverdampfer Kanäle für die Führung des Stoffgemisches mit einem hydraulischen Durchmesser von 5 bis 1000 $\mu$m und eine spezifische Verdampferfläche von mindestens $10^3$ m$^2$/m$^3$ aufweist.

2. Verfahren nach Anspruch 1, **dadurch gekennzeichnet, dass** die Kanäle des Mikroverdampfers einen hydraulischen Durchmesser von 30 bis 500 $\mu$m aufweisen.

3. Verfahren nach einem der Ansprüche 1 oder 2, **dadurch gekennzeichnet, dass** der Mikroverdampfer Kanäle für die Führung des Heizmediums mit einem hydraulischen Durchmesser von 5 bis 1000 $\mu$m, bevorzugt von 30 bis 500 $\mu$m, aufweist.

4. Verfahren nach einem der Ansprüche 1-3, **dadurch gekennzeichnet, dass** die Temperatur - 100 bis 500 °C, bevorzugt 0 bis 400 °C, besonders bevorzugt 50 bis 250 °C, beträgt.

5. Verfahren nach einem der Ansprüche 1-4, **dadurch gekennzeichnet, dass** der Druck 0 bis 100 bar, bevorzugt 0 bis 10 bar, besonders bevorzugt 0 bis 1 bar, beträgt.

6. Verfahren nach einem der Ansprüche 1-5, **dadurch gekennzeichnet, dass** die Verweilzeit 0,001 bis 60 s, bevorzugt 0,01 bis 10 s, beträgt.

## Claims

1. Process for the removal of at least one monomeric diisocyanate as a volatile compound from a composition of matter at least containing a polyisocyanate with the aid of at least one micro-evaporator, wherein the micro-evaporator includes channels for carrying the composition of matter which have a hydraulic diameter of 5 to 1000 $\mu$m, and has a specific evaporation surface area of at least $10^3$ m$^2$/m$^3$.

2. Process according to Claim 1, **characterized in that** the channels of the micro-evaporator have a hydraulic diameter of 30 to 500 $\mu$m.

3. Process according to Claim 1 or Claim 2, **characterized in that** the micro-evaporator includes channels for carrying the heating medium which have a hydraulic diameter of 5 to 1000 $\mu$m, preferably of 30 to 500 $\mu$m.

4. Process according to any one of Claims 1-3, **characterized in that** the temperature is -100 to 500°C, preferably 0 to 400°C, more preferably 50 to 250°C.

5. Process according to any one of Claims 1-4, **characterized in that** the pressure is 0 to 100 bar, preferably 0 to 10 bar, more preferably 0 to 1 bar.

6. Process according to any one of Claims 1-5, **characterized in that** the residence time is 0.001 to 60 s, preferably 0.01 to 10 s.

## Revendications

1. Procédé pour l'élimination d'au moins un diisocyanate monomère, comme composant volatil, d'un mélange de substances contenant au moins un polyisocyanate, à l'aide d'au moins un micro-évaporateur, le micro-évaporateur comportant pour le guidage du mélange de substances des canaux avec un diamètre hydraulique de 5 à 1000 $\mu$m et présentant une surface d'évaporateur spécifique d'au moins $10^3$ m$^2$/m$^3$.

2. Procédé selon la revendication 1, **caractérisé en ce que** les canaux du micro-évaporateur présentent un diamètre hydraulique de 30 à 500 $\mu$m.

3. Procédé selon l'une quelconque des revendications 1 ou 2, **caractérisé en ce que** le micro-évaporateur comporte des canaux pour le guidage du fluide de chauffage avec un diamètre hydraulique de 5 à 1000 $\mu$m, de préférence de 30 à 500 $\mu$m.

4. Procédé selon l'une quelconque des revendications 1 à 3, **caractérisé en ce que** la température est de -100 à 500 °C, de préférence de 0 à 400 °C, de façon particulièrement préférée de 50 à 250 °C.

5. Procédé selon l'une quelconque des revendications 1 à 4, **caractérisé en ce que** la pression est de 0 à 100 bars, de préférence de 0 à 10 bars, de façon particulièrement préférée de 0 à 1 bar.

6. Procédé selon l'une quelconque des revendications 1 à 5, **caractérisé en ce que** le temps de séjour est de 0,001 à 60 s, de préférence de 0,01 à 10 s.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10010400 A

- US 3234994 A

**In der Beschreibung aufgeführte Nicht-Patentliteratur**

- **M. K. DROST ; CH. CALL ; J. CUTA ; R. WEGENG.** Microchannel combustor/evaporator thermal processes. *Microscale Thermophysical Engineering,* 1997, vol. 1, 321-332